# EUROPEAN PATENT SPECIFICATION

(11) **EP 1 304 699 B1**
(45) Date of publication and mention of the grant of the patent: **09.05.2007**
(21) Application number: 02257086.5
(22) Date of filing: 11.10.2002
(51) Int. Cl.: G11B 23/03

(54) **Disk cartridge**
Plattenkassette
Cartouche à disque

(30) Priority: 18.10.2001 KR 2001064366; 25.10.2001 KR 2001066020
(43) Date of publication of application: 23.04.2003
(73) Proprietor: SAMSUNG ELECTRONICS CO. LTD., Kyungki-do, Seoul (KR)
(72) Inventor: Choi, Han-kook, Paldal-gu, Suwon-si Gyeonggi-do (KR); Yim, Hong-kyun, Paldal-gu, Suwon-si Gyeonggi-do (KR); Lee, Yong-hoon, Youngtong-dong, Paldal-gu, Suwon-si, Gye (KR); Kang, Heui-jong, Mississauga, Ontario, (CA); Chung, Chong-sam, Palgal-gu, Suwon-si, Gyeonggi-do (KR); Eum, Jae-yong, Paldal-gu, Suwon-si, Gyeonggi-do (KR)
(74) Representative: Robinson, Ian Michael

(56) References cited:
- EP-A- 0 273 983
- EP-A- 0 358 442
- EP-A- 0 974 972
- EP-A- 1 103 971
- WO-A-96/21224
- WO-A-99/26242
- WO-A-02/056313
- US-A- 5 717 684
- US-A- 5 898 664
- US-A- 6 021 029
- PATENT ABSTRACTS OF JAPAN vol. 1998, no. 01, 30 January 1998 (1998-01-30) & JP 09 245452 A (SONY CORP), 19 September 1997 (1997-09-19)
- PATENT ABSTRACTS OF JAPAN vol. 1998, no. 01, 30 January 1998 (1998-01-30) & JP 09 251748 A (SONY CORP), 22 September 1997 (1997-09-22)

## Description

The present invention relates to a disk cartridge for accommodating a disk that is an information recording/reproducing medium and protecting a recording surface thereof from a contaminant such as dust or finger prints.

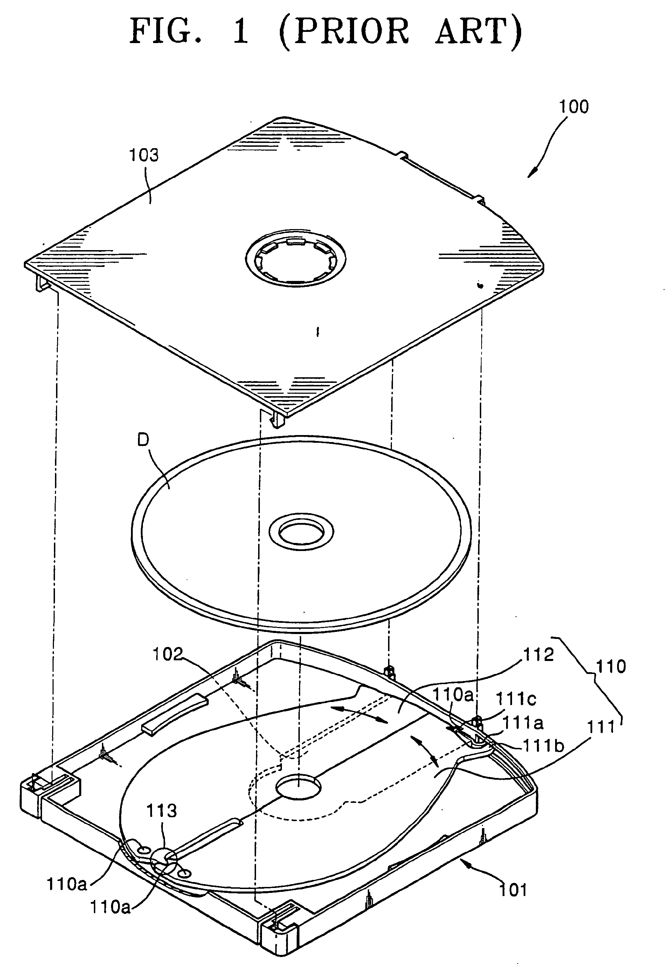

In general, a disk cartridge accommodates a disk that is an information recording/reproducing medium and is loaded into a disk drive apparatus. As shown in Figure 1, a disk cartridge 100 includes a case 101 for accommodating a disk D, and a shutter 110 installed inside the case 101 to be capable of rotating and selectively open and shut an access aperture 102 formed in the case 101 so that a pickup (not shown) of a disk drive apparatus can access the disk D. A cover 103 seals a disk accommodating space to prevent contamination of the disk D by dust. However, the cover 103 is frequently omitted, because dust contamination has negligible effect on reading of the disk D, particularly following recent software developments.

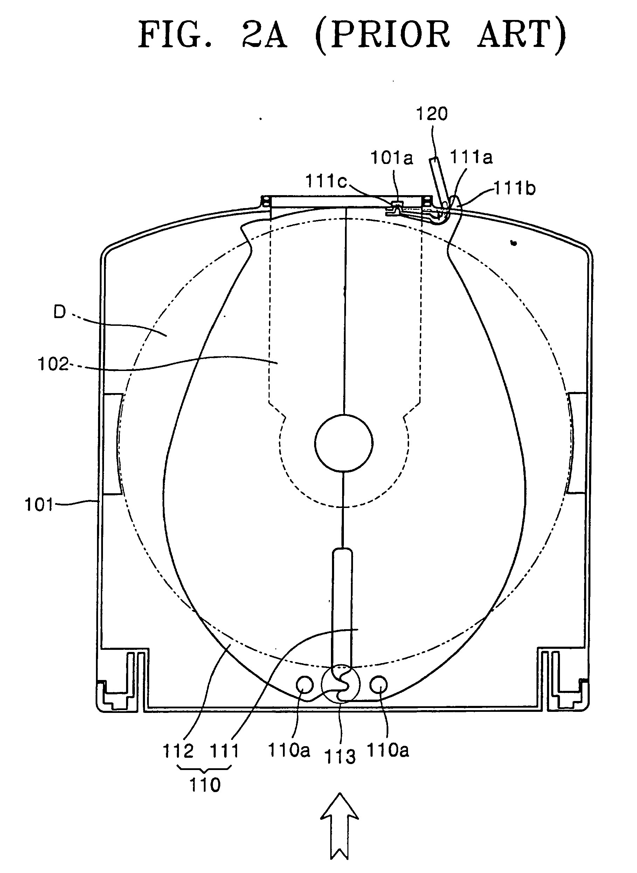

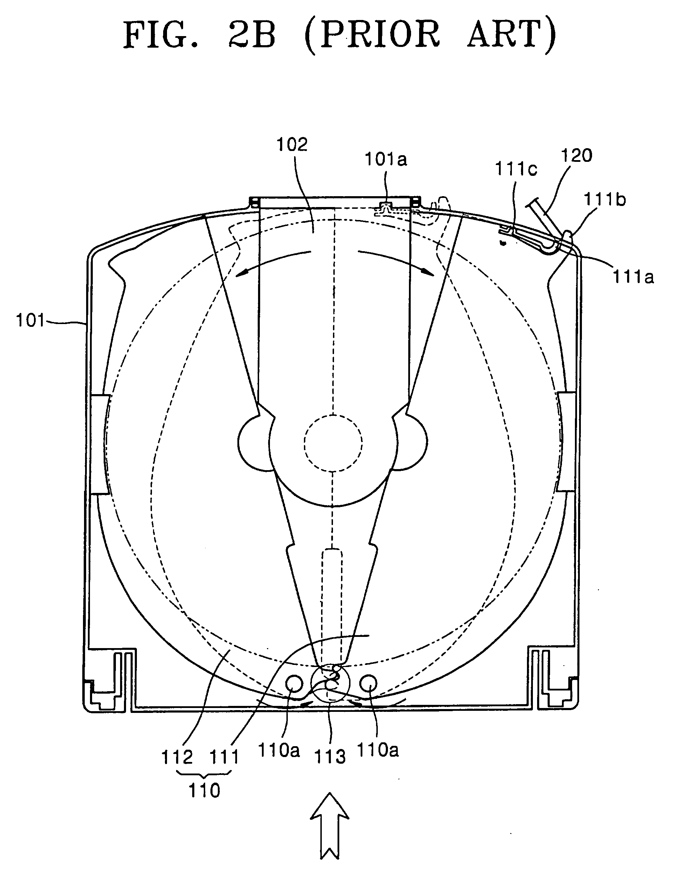

When the disk cartridge 100 is loaded into a disk drive apparatus, as shown in Figure 2A, an opening lever 120 installed in the disk drive apparatus first presses a locking piece 111a to unlock a protrusion 111c of the shutter 110 from a groove 101a of the case 101. Next, as shown in Figure 2B, the opening lever 120 completely pushes an interference piece 111b to rotate the shutter 110. The shutter 110 includes first and second shutter portions 111 and 112 installed to be capable of rotating around each of left and right rotation shafts 110a and engaged with each other via an engagement gear portion 113. Accordingly, as the first shutter portion 111 integrally connected to the interference piece 111b rotates clockwise, the second shutter portion 112 rotates counterclockwise, so that the first and second shutter portions 111 and 112 are separated widely, thus opening the aperture 102. Then, a pickup (not shown) of the disk drive apparatus accesses the recording surface of the disk D through the opened aperture 102 to perform recording and/or reproduction of information. Although not shown in the drawings, a torsion spring for elastically biasing the first shutter portion 111 counterclockwise, that is, in a direction to close the aperture 102, is installed at the rotation shaft 110a between the first shutter portion 111 and the bottom surface of the case 101. Thus, when a force pressing the opening lever 120 is removed, the shutter 110 returns to the original closed state.

However, in the above-described structure, since the shutter 110 is installed inside the case 101 and the disk D is placed on the shutter 110, during opening and shutting operations of the shutter 110, the recording surface of the disk D (a lower surface of the disk) and the shutter 110 make a surface contact which may damage the disk recording surface, for example, a scratch. The scratch may act as a considerable external interference factor compared to the dust adhering to the recording surface. Therefore, a structure which can protect the recording surface of a disk during the opening and shutting operations of the shutter 110 is needed.

EP 1 103 971, EP 0 358 442, EP 0 273 983, and Patent Abstracts of Japan, vol 1998, no. 01, 30 January 1998 & JP 09 251748A, 22 September 1997 disclose disk cartridges for accommodating a disc in which the disk is supported on a non-information area of the disk.

Documents US-6 021 029 A and WO 99.26 242 A both disclose a disk cartridge comprising the features of the preamble of claim 1.

It is an aim of the present invention to provide a disk cartridge that protects the recording surface of a disk during the opening and shutting operations of a shutter installed in the case.

According to the present invention there is provided a disk cartridge, comprising: a case for accommodating a disk and including an access aperture; and a shutter installed inside the case for selectively opening and shutting the access aperture; a support portion arranged in use to support a non-information area of the disk characterised in that the support portion comprises:
first and second support portions formed non and protruding from first and second shutter portions, respectively arranged to support an outer circumferential non-information area of the disc.

Ideally, the support portion includes a flat portion arranged to support the outer circumferential non-information area of the disk when the shutter is in a closed state, and an inclined portion arranged to support the outer circumferential non-information area when the shutter is in an open state.

In one preferred aspect of the invention there is provided a disk cartridge including a case for accommodating a disk and a shutter installed in the case to be capable of moving under a disk, for selectively opening/shutting an aperture formed in the case, the disk cartridge comprising a support portion protruding from the shutter to support a non-information area of the disk.

For a better understanding of the invention, and to show how embodiments of the same may be carried into effect, reference will now be made, by way of example, to the accompanying diagrammatic drawings in which:
Figure 1 is an exploded perspective view of a conventional disk cartridge;
Figures 2A and 2B are plan views showing the opening and shutting operations of a shutter of a disk cartridge shown in Figure 1;
Figure 3 is an exploded perspective view of a disk cartridge according to a first preferred embodiment of the present invention;
Figure 4 is a magnified view showing a portion indicated by reference letter A of Figure 3;
Figure 5 is a plan view showing the state in which the shutter of the disk cartridge of Figure 3 is open;
Figure 6 is an exploded perspective view of a disk cartridge not in accordance with the present invention;
Figure 7 is a plan view showing the state in which the shutter of the disk cartridge of Figure 6 is open;
Figure 8 is an exploded perspective view of a disk cartridge not in accordance with the present invention;
Figure 9 is a magnified view showing a portion indicated by reference letter B of Figure 8;
Figure 10 is a magnified view showing a portion indicated by reference letter C of Figure 8; and
Figure 11 is a plan view showing the state in which the shutter of the disk cartridge of Figure 8 is open.

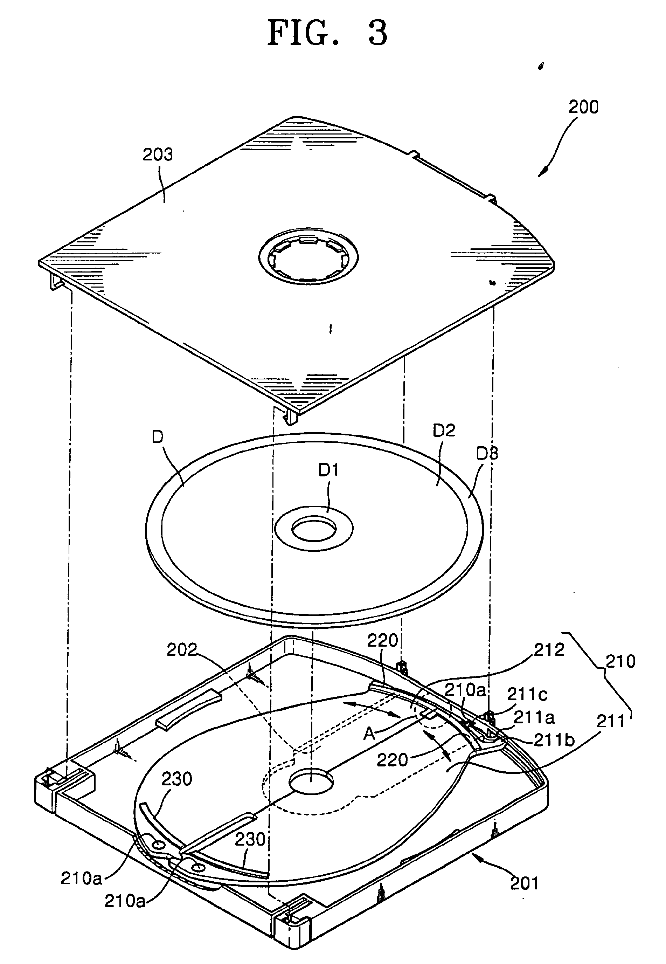

Figures 3 through 5 show a disk cartridge according to a first preferred embodiment of the present invention. Referring to Figure 3, a disk cartridge 200 includes a case 201 for accommodating a disk D, a shutter 210 for opening and shutting an aperture 202 formed in the case 201 under the disk D, and a cover 203 for covering the upper surface of the case 201 which is optional.

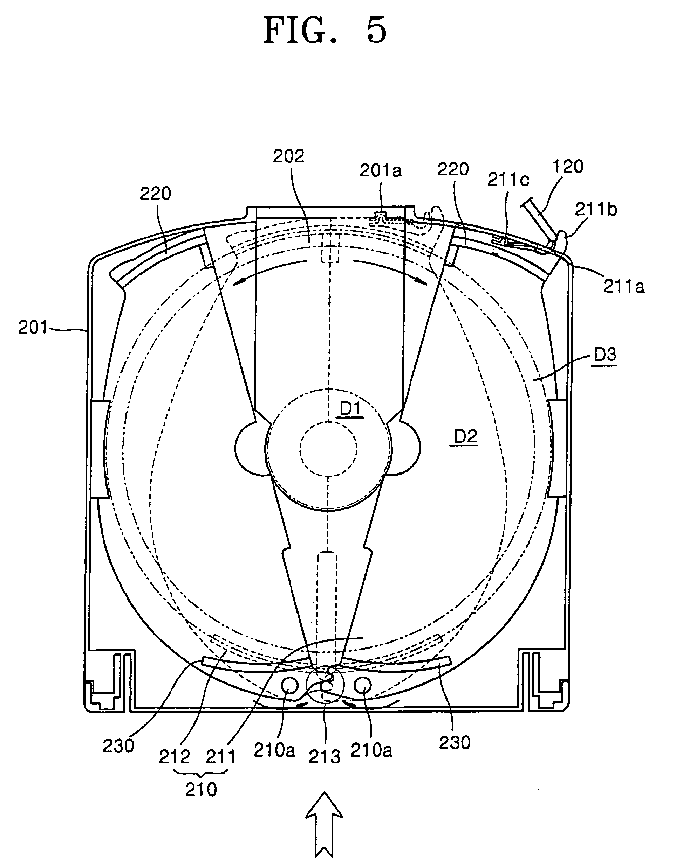

Here, the shutter 210 includes first and second shutter portions 211 and 212 symmetrically installed inside the case 201 to be capable of rotating. Thus, as the first and second shutter portions 211 and 212 are separated wide from each other, as shown in Figure 5, the aperture 202 is opened. When the first and second shutter portions 211 and 212 are rotated in a direction so that they are closed, as shown in Figure 3, the aperture 202 is closed. Reference numeral 213 is an engagement gear portion for connecting the first and second shutter portions 211 and 212 to be capable of interacting. Accordingly, as the first shutter portion 211 rotates, the second shutter portion 212 is rotated by the engagement gear portion 213 in the opposite direction.

Although not shown in the drawing, a torsion spring for elastically biasing the first shutter portion 211 counterclockwise, that is, in a direction to close the aperture 202, is installed at a rotation shaft 210a between the first shutter portion 211 and the bottom surface of the case 201. Thus, when a force applied by the opening lever 120 is removed, the shutter 210 is returned to the original closed state.

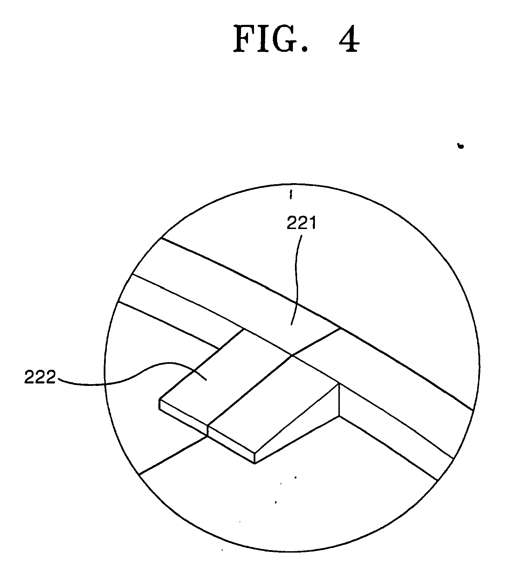

Support portions 220 and 230 contacting the outermost edge of the disk D protrude from the first and second shutter portions 211 and 212. That is, the disk D includes a clamping area D1 at the inner circumferential side of the disk D, an information area D2 where information is recorded, and an edge portion D3 at the outer circumferential side of the information area D2. The support portions 220 and 230 support the edge portion D3 that is one of non-information areas to avoid contact between the information area D2 and the shutter 210. The support portion 220 at the upper side on the drawing, as shown in Figure 4, includes a flat portion 221 formed along the circumference of the disk D and an inclined portion 222 inclined toward the center of the disk D. Thus, although the inclined portion 222 appears to contact the information area D2 of the disk D in Figure 5, in fact, the inclined portion 222 that is inclined does not contact the disk D. Instead, the inclined portion 222 supports the edge portion D3 of the disk D when the shutter 210 is in an open state. That is, since the rotation shaft 210a of the shutter 210 does not match the center of the disk D, when the shutter 210 is opened, the flat portion 221 is slightly deviated from the position for supporting the edge portion D3 of the disk D. Here, the inclined portion 222 supports the edge portion D3 instead of the flat portion 221.

When the disk cartridge 200 having the above structure is loaded into a disk drive apparatus, as shown in Figure 5, the opening lever 120 installed at the disk drive apparatus presses a locking piece 211a to unlock a protrusion 211c from a groove 201a and then pushes an interference piece 211b to rotate the first shutter portion 211 clockwise. Then, the second shutter portion 212 rotates counterclockwise by the engagement gear portion 213 and the aperture 202 is open between the first and second shutter portions 211 and 212. However, since only the support portions 220 and 230 of the first and second shutter portions 211 and 212 contacts the disk D and the supported portion is limited to the edge portion D3 of the disk D, there will hardly be a danger of damaging the information area D2 of a recording surface during the opening and shutting operations of the shutter 210.

Also, when the shutter 210 closes the aperture 202, returning to the state shown in Figure 3, since this closing operation is performed in the state in which the support portions 220 and 230 contact the edge portion D2 of the disk D, the information area D2 of the disk D can be safely kept.

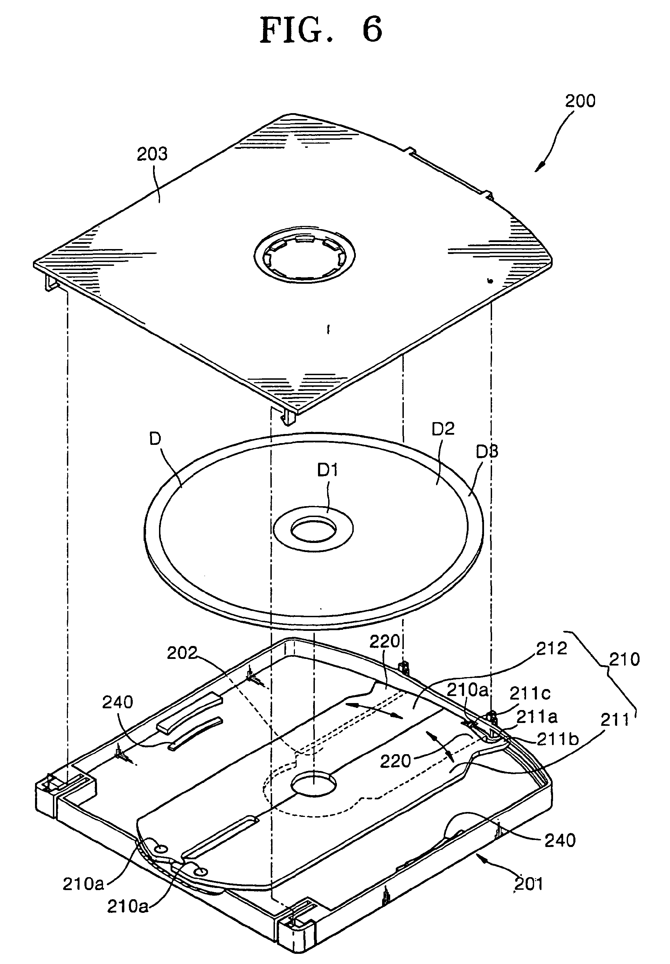

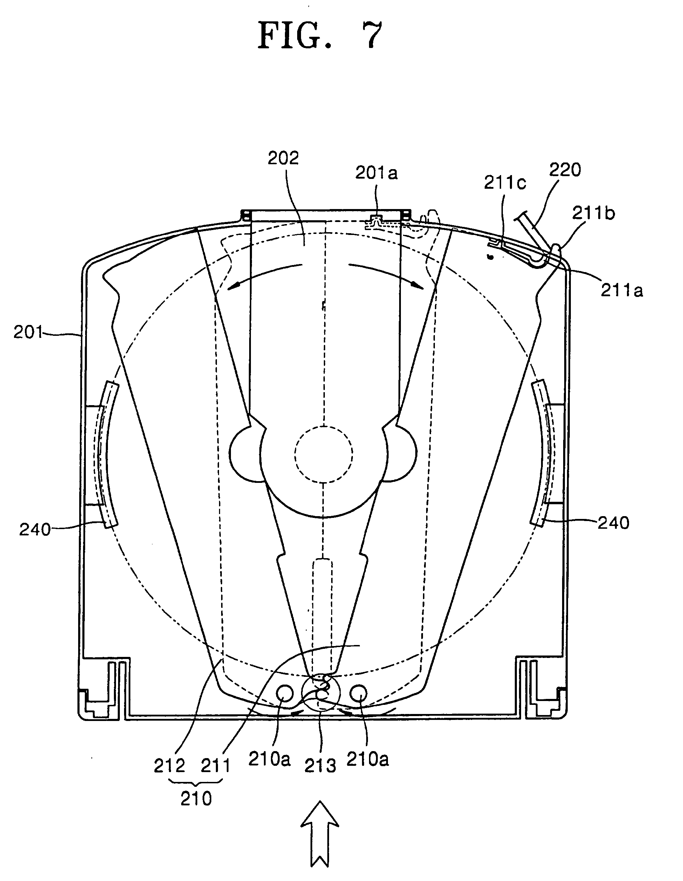

In Figures 6 and 7 the same reference numerals as those in the first preferred embodiment denote the same members having the same functions.

A support portion 240 for supporting the edge portion D3 of the disk D is directly formed on the bottom surface of the case 201, not on the shutter 210. That is, by forming the support portion 240 on the bottom surface of the case 201 that is fixed, not on the shutter 201 that is moving, to support the disk D, the contact between the shutter 210 and the disk D are fundamentally prevented. Of course, the support portion 240 is preferably formed at the position that does not interfere with a rotation area of the shutter 210.

When the disk cartridge 200 having the above structure is inserted into a disk drive apparatus, as shown in Figure 7, the opening lever 120 installed in the disk drive apparatus presses the locking piece 211a to unlock the protrusion 211c from the groove 201a and pushes the interference piece 211b to rotate the first shutter portion 211 clockwise. Then, the second shutter portion 212 rotates counterclockwise by the engagement gear portion 213 so that the aperture 202 is opened between the first and second shutter portions 211 and 212. However, during the operation of the shutter 210, since the disk D is supported by the support portion 240 and does not contact the shutter 210, the danger of the information area D2 of the recording surface being damaged is removed. Thus, when the shutter 210 installed inside the case 201 is opened or shut, the information area D2 of the disk D can be prevented from being damaged.

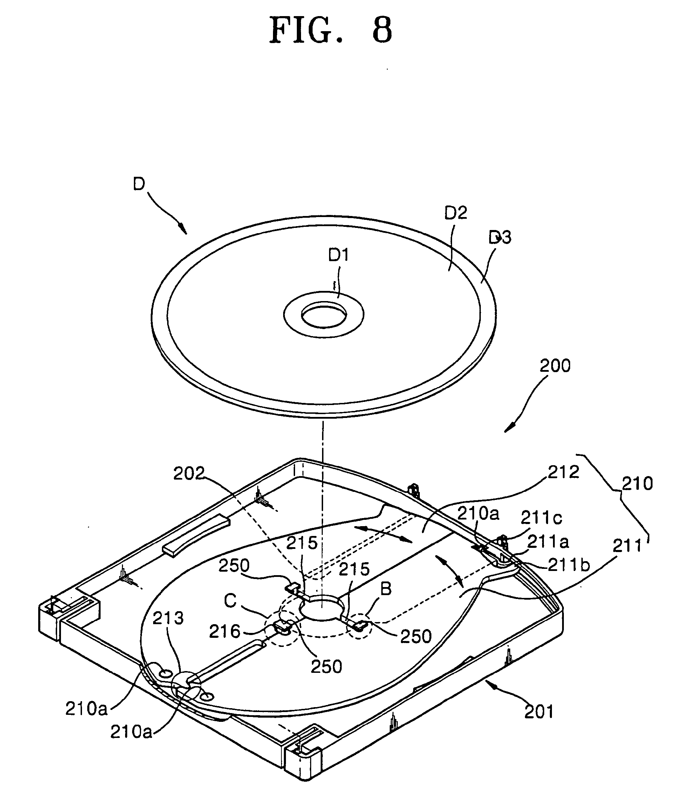

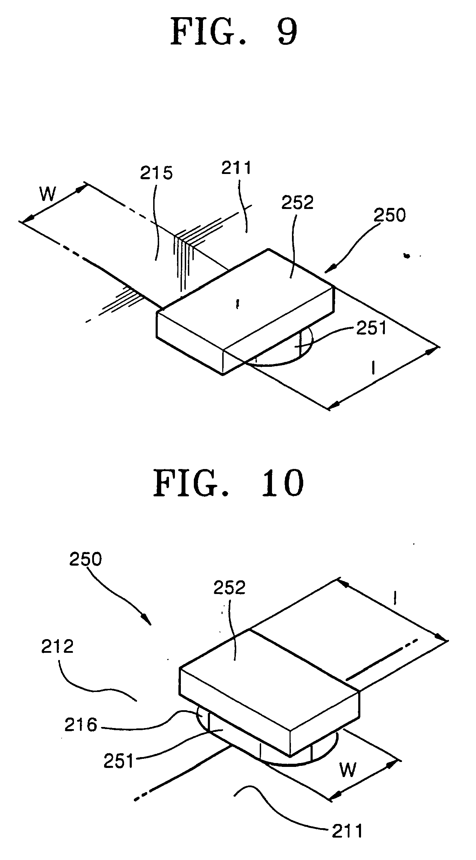

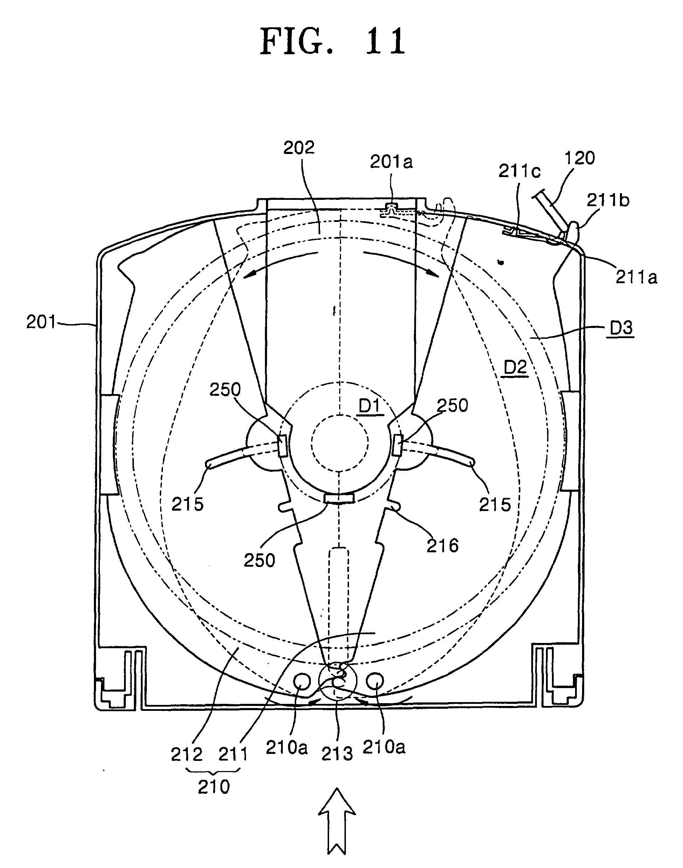

Figure 8 is an exploded perspective view of a disk cartridge not in accordance with the present invention. Figure 9 is a magnified view showing a portion indicated by reference letter B of Figure 8. Figure 10 is a magnified view showing a portion indicated by reference letter C of Figure 8. Figure 11 is a plan view showing the state in which the shutter of the disk cartridge of Figure 8 is open.

The same reference numerals as those in the above-described preferred embodiments indicate the same elements having the same functions. Referring to Figure 8, the disk cartridge 200 includes the case 201 for accommodating the disk D and the shutter 210 for opening or shutting the aperture 202 formed in the case 201 under the disk D.

A plurality of support portions 250 contacting the clamping area D1 that is a non-information area disposed at the inner circumference of the disk D are provided at the case 201 to protrude therefrom. Guide channels 215 and 216 are formed in the shutter 201 to prevent contact and interference with the support portion 250 when the shutter 210 is opened and shut.

Referring to Figures 9 and 10, the support portion 250 includes a protruding portion 251 extending from the case 201 and protruding above the upper surface of the shutter 210 and a contact portion 252 provided on the top of the protruding portion 251 to support the clamping area D1 of the disk D.

The guide channel 215 is a lengthy channel having an arc-shape end portion formed in the shutter 210 so that, when the shutter 210 is opened or shut, the shutter 210 does not contact and interfere with the protruding portion 251. The guide channel 216 is a hole so that, when the shutter 210 is opened or shut, the shutter 210 does not contact and interfere with the protruding portion 251.

The contact portion 252 is disposed above the upper surface of the shutter 210 and the length 1 of one side of the contact portion 252 is preferably formed to be greater than the width w of each of the guide channels 215 and 216. Accordingly, in the state in which the shutter 210 is closed, when a force applied from the outside to the shutter 210, that is, the shutter 210 is pressed toward the disk D, the shutter 210 is caught by the contact portion 252 so that a further pressing to the shutter 210 is prevented. Thus, since the shutter 210 does not contact the information area D2 of the disk D, the information area D2 of the disk D is prevented from being damaged.

When a user incidentally presses the shutter 210 during handling of the disk cartridge 200, the shutter 210 is caught by the support portion 252 and does not contact the information area D2 of the disk D.

In the disk D having the clamping area D1, the information area D2 where information is recorded, and the edge portion D3 located outside the information area D2, since the clamping area D1 that is one of the non information areas is supported by the support portion 250, the information area D2 can avoid contacting the shutter 210. Also, when the shutter 210 is closed, the contact between the information area D2 and the shutter 210 can be prevented by the support portion 252.

Although the support portion 252 has a rectangular shape various shapes such as cylinder having the same function can be used.

The operation of the disk cartridge having the above structure is described below.

When the disk cartridge 200 is loaded into a disk drive apparatus (not shown), as shown in Figure 11, the opening lever installed at the disk drive apparatus presses the locking piece 211a to unlock the protrusion 211c from the groove 201a. Then, the opening lever 120 pushes the interference piece 211b to rotate the first shutter portion 211 clockwise. Accordingly, the second shutter portion 212 is rotated counterclockwise by the engagement gear portion 213 so that the aperture 202 is opened between the first and second shutters 211 and 212.

Here, since the support portion 252 contacts only the clamping area D1 of the disk D, the information area D2 of the recording surface is hardly scratched during the opening and shutting operations of the shutter 210. Also, when the shutter 210 closes the aperture 202 to return to the state of Figure 8, since the closing operation is performed in the state in which the support portion 252 contacts only the clamping area D1 of the disk D, the information area D2 of the disk D can be stably kept.

The disk cartridge described herein has many advantages.

First, since the support portion formed on the shutter or the case contacts only the non-information area of the disk, the information area of the disk can be stably kept during the operation of the shutter to open and shut the aperture.

Second, even when an external force is applied to the shutter being closed, the shutter is caught by the support portion and prevented from being pressed further, the information area of the disk can be kept free of damage.

## Claims

1. A disk cartridge, comprising:
a case (201) for accommodating a disk (D) and including an access aperture (202); and
a shutter (210) installed inside the case for selectively opening and shutting the access aperture (202);
a support portion (220,230) arranged in use to support a non-information area (D3) of the disk (D);
**characterised by**:
the support portion comprising first and second support portions (220, 230) formed on and protruding from first and second shutter portions (211, 212), respectively arranged to support an outer circumferential non-information area (D3) of the disc (D).

2. The disk cartridge of claim 1, wherein the support portion (220) includes a flat portion (221) arranged to support the outer circumferential non-information area (D3) of the disk (D) when the shutter is in a closed state, and an inclined portion (222) arranged to support the outer circumferential non-information area (D3) when the shutter (210) is in an open state.

## Patentansprüche

1. Eine Diskette, umfassend:
ein Gehäuse (201) zum Aufnehmen einer Disk (D) und eine Zugriffsöffnung (202) einschließend; und
einen Verschluss (219), der innerhalb des Gehäuses zum wahlweisen Öffnen und Schließen der Zugriffsöffnung (202) angebracht ist;
ein Trägerteil (220, 230), das im Gebrauch so angeordnet ist, dass es einen Nichtinformationsbereich (D3) der Disk (D) stützt;
**dadurch gekennzeichnet, dass**
das Trägerteil erste und zweite Trägerteile (220, 230) umfasst, die auf ersten und zweiten Verschlussteilen (211, 212) ausgebildet sind und von diesen hervorragen, die jeweils so angeordnet sind, dass sie einen äußeren peripheren Nichtinformationsbereich (D3) der Disk (D) stützen.

2. Die Diskette von Anspruch 1, in der das Trägerteil (220) ein flaches Teil (221) einschließt, das so angeordnet ist, dass es den äußeren peripheren Nichtinformationsbereich (D3) der Disk (D) stützt, wenn sich der Verschluss in einem geschlossenen Zustand befindet, und ein geneigtes Teil (222), das so angeordnet ist, dass es den äußeren peripheren Nichtinformationsbereich (D3) stützt, wenn sich der Verschluss (210) in einem geöffneten Zustand befindet, einschließt.

## Revendications

1. Cartouche de disque, comprenant :
un boîtier (201) pour loger un disque (D) et comprenant une ouverture d'accès (202) ; et
un volet (210) installé à l'intérieur du boîtier pour ouvrir et fermer de manière sélective l'ouverture d'accès (202) ;
une portion de support (220, 230) agencée en utilisation pour supporter une zone ne comportant pas d'informations (D3) du disque (D) ;
**caractérisée en ce que** :
la portion de support comprend des première et seconde portions de support (220, 230) formées sur et dépassant des première et seconde portions de volet (211, 212), respectivement agencées pour supporter une zone ne comportant pas d'informations circonférentielle externe (D3) du disque (D).

2. Cartouche de disque selon la revendication 1, dans laquelle la portion de support (220) comprend une portion plate (221) agencée pour supporter la zone ne comportant pas d'informations circonférentielle externe (D3) du disque (D) lorsque le volet est dans un état fermé, et une portion inclinée (222) agencée pour supporter la zone ne comportant pas d'informations circonférentielle externe (D3) lorsque le volet (210) est dans un état ouvert.
